# EUROPEAN PATENT SPECIFICATION

(11) **EP 2 523 308 B1**
(45) Date of publication and mention of the grant of the patent: **19.09.2018**
(21) Application number: 12167777.7
(22) Date of filing: 11.05.2012
(51) Int. Cl.: H02K 1/16, H02K 1/20, H02K 15/02, H02K 5/18, H02K 7/18

(54) **LAMINATION FOR STATOR CORE, STATOR CORE COMPRISING SAID LAMINATION AND METHOD FOR MAKING SAID LAMINATION**
BLECHABSCHNITTE FÜR STÄNDERKERN, STÄNDERKERN SOWIE HERSTELLUNGSVERFAHREN
TÔLE STATORIQUE, STATOR DE MACHINE DYNAMO-ÉLECTRIQUE, ET PROCÉDÉ DE PRODUCTION

(30) Priority: 12.05.2011 IT VI20110121
(43) Date of publication of application: 14.11.2012
(73) Proprietor: SOGA S.P.A., 36075 Montecchio (VI) (IT)
(72) Inventor: Soga, Lino, 36075 MONTECCHIO MAGGIORE (VI) (IT)
(74) Representative: Bonini, Ercole

(56) References cited:
- WO-A1-2004/030179
- WO-A1-2005/022718
- DE-A1-102008 063 783
- JP-A- 2011 066 991
- US-A- 4 494 030
- "I. DAS BLECHPAKET", KONSTRUKTION ELEKTRISCHER MASCHINEN, SPRINGER VERLAG, BERLIN, DE, 1 January 1967 (1967-01-01), pages 261-269, XP009046351,

## Description

The present invention concerns a lamination for a stator core, particularly suitable for making a stator core for multipole permanent magnet generators, in particular of the type used in wind-operated or hydraulic power generators, the latter being also known as "hydro generators" in technical jargon.

As is known, a permanent magnet generator comprises a cylindrical stator core provided with a longitudinal hole inside which the rotor is housed.

The stator core is comprised of a plurality of laminations made of a ferromagnetic material, stacked on one another according to the direction defined by the longitudinal axis of the stator core.

Each lamination features a substantially annular peripheral portion provided with a plurality of projections extending towards the longitudinal axis of the stator core, called "teeth" in technical jargon, around which the copper wire forming the stator windings is wound.

Each annular lamination can come in a single piece or be divided in modular elements, each one of which corresponds to a sector of the lamination, that are arranged adjacent to each other in order to form the lamination itself.

The external surface of the stator core is generally smooth and cylindrical in shape, so that it can be inserted inside a casing that serves also as a support for the generator.

The casing also serves as an element for dissipating the heat produced by the generator during operation and for this purpose it is provided with cooling fins that project from the surface of the casing.

It is known that, for various reasons, the weight of the generator must be as limited as possible, since a considerable weight means increased generator transport and installation costs.

Said costs are particularly high in the sector of electric energy production through wind turbines, in which the generator must be transported to places that are often difficult to reach, like for example hills, sea surfaces or deserts, and must be installed on the top of a supporting tower.

The weight of the generator also affects the cost of the above mentioned supporting tower, which must be sized in such a way as to support the weight of the generator as well as the weight of the wind turbine blades.

It must also be considered that, as the power of the wind turbine increases, the corresponding increase in the length of the turbine blades requires a higher tower.

The above makes it clear to understand that more wind turbine power means more drawbacks connected to the weight of the various components of the turbine and, consequently, a higher need to reduce this weight.

Furthermore, as the power of the wind turbine and therefore the blade length increase, the turbine rotation speed must be reduced in order to limit the peripheral speed of the blades themselves.

Consequently, in order to be able to deliver more power with lower rotation speed, the generator must be larger, which makes it even more important to limit the weight of the generator itself.

Examples of laminations and stator cores according to the prior art are disclosed in documents US 2006/0125341 and JP 2011-066991.

The present invention has the purpose of providing a multipole generator or, more generally, a power generator or an electrical machine whose overall weight is lower than the weight of equivalent electrical machines of the known type.

It is another object of the invention to reduce the quantity of material used for the construction of the above mentioned generator.

The above mentioned object is achieved by a modular element for making a lamination for stator core produced according to claim 1, as well as by a stator core comprising said modular element, according to claim 6, and by a method for making said modular element, according to claim 13.

Further characteristics and details of the invention are described in the corresponding dependent claims.

Advantageously, the lamination obtained with the invention makes it possible to obtain a stator core and thus a power generator or an electrical machine weighing less than an equivalent machine of the known type, in particular with multipole generators of the type used in the sector of production of wind power or hydro power.

Still advantageously, the above mentioned weight reduction makes it possible to limit also the weight of the bearing structure intended to support the machine itself, in particular in the case where the electrical machine is a generator for wind turbines.

In the case just mentioned, said weight reduction also makes it possible to reduce the overall installation cost of the wind turbine using said generator. The above mentioned objects and advantages, together with others which will be highlighted below, are illustrated in the description of two preferred embodiments of the invention which are provided by way of non-limiting examples with reference to the attached drawings, wherein:
- Figure 1 shows a plan view of a modular element for a stator core according to the invention;
- Figure 2 shows a plan view of the arrangement of two modular elements according to Figure 1 during the strip shearing operation;
- Figure 3 shows an axonometric view of some modular elements according to Figure 1 during the assembly of a stator core according to the invention;
- Figure 4 shows an axonometric view of a stator core produced using the modular elements shown in Figure 1;
- Figure 5 shows a plan view of a variant embodiment of a modular element according to the invention;
- Figure 6 shows a plan view of the arrangement of two modular elements according to Figure 5 during the strip shearing operation;
- Figure 7 shows an axonometric view of a stator core produced using the modular elements shown in Figure 5;
- Figure 8 shows an enlarged view of the detail VIII of Figure 7.

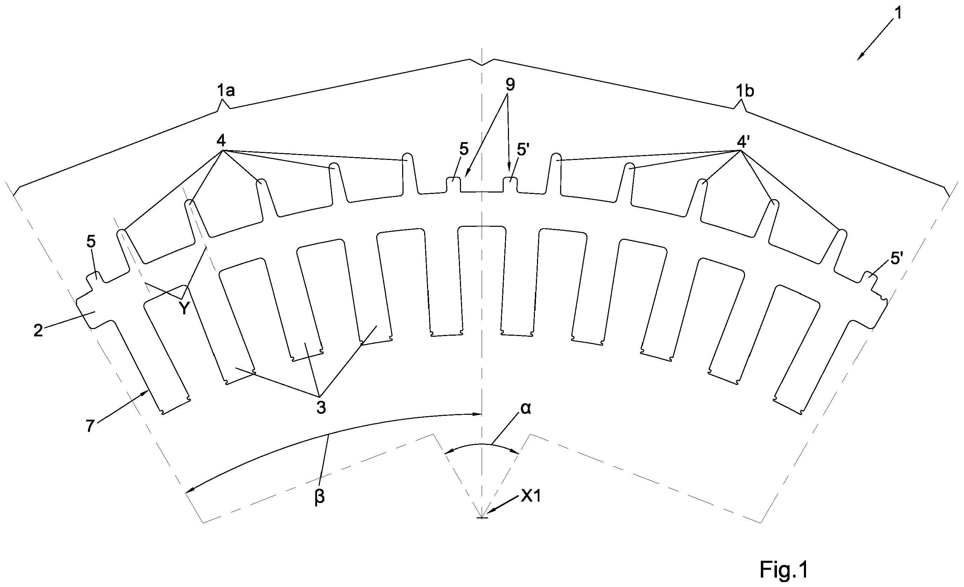

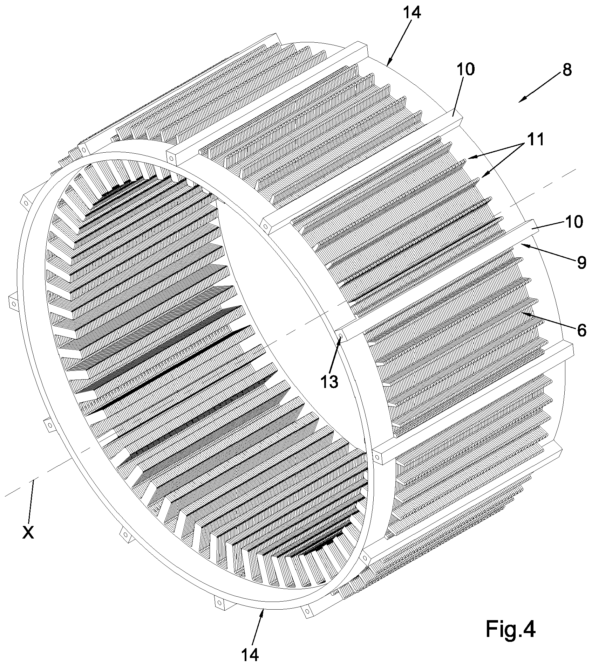

The modular element of the invention, indicated by the reference number **1** in Figure 1, is particularly suitable for making a multipole stator core **8** for a permanent magnet generator of the type used for the generation of wind or hydro power shown in Figure 4.

It will be clear to the person skilled in the art that the concept on which the invention is based can be applied in an analogous manner to make a stator core suitable for any type of power generator or electrical machine.

As can be seen in Figure 4, the stator core **8** of the invention comprises a plurality of laminations **6** stacked on each other along the direction of the longitudinal axis **X** of the stator core **8**.

Each lamination **6** comprises a plurality of modular elements **1**, one of which is shown in Figure 1, arranged adjacent to one another so as to form a ring. Advantageously, the division of the laminations **6** in modular elements corresponding to different sectors of each lamination makes it possible to reduce the quantity of material used for the production of the laminations themselves, as is clearly explained here below.

Each modular element **1** comprises a corresponding plate-like body **7** in a ferromagnetic material, which is constituted by a peripheral portion **2** extending in a substantially annular shape over a predefined angular width **α** around a centre **X1** belonging to the longitudinal axis **X** of the stator core **8**.

The modular element **1** also comprises a plurality of teeth **3** projecting from the peripheral portion **2** towards the above mentioned centre **X1**, around which the copper wire making up the windings of the stator core 8 is wound.

The modular element **1** also comprises a plurality of first projections **4**, **4'** that extend from the peripheral portion **2** on the opposite side with respect to the teeth **3** according to corresponding directions of development **Y** that are preferably but not necessarily directed radially, meaning that they pass through the centre **X1**.

When the modular elements **1** are stacked to form the stator core **8**, the alignment of the first projections **4**, **4'** defines on the external surface of the stator core **8** the same number of fins 11 that preferably extend over the whole length of the stator core **8**.

Clearly, the above mentioned fins **11** increase the external surface area of the stator core **8** and thus increase it capacity to dissipate heat.

Consequently, to advantage, for the above mentioned stator core **8** the presence of a finned casing is not required.

The absence of a finned casing makes it possible to achieve the object to reduce the weight of the stator core **8** compared to equivalent stator cores of the known type provided with casing.

Furthermore, to advantage, the absence of the casing simplifies the generator production process, thus reducing the cost of the latter.

Clearly, the heat dissipation capacity of the stator core **8** increases as the number of fins **11** increases.

Therefore, it is preferable for each modular element **1** to be provided with a large number of first projections **4**, **4'**, for example equal to or larger than the number of teeth **3** of the modular element **1**.

For example, the modular element **1** of Figure 1 is provided with an overall number of first projections **4**, **4'** that is equal to the number of teeth **3**.

The heat dissipation capacity of the stator core **8** also increases as the height of the fins **11** increases.

Therefore, the length of each projection **4**, **4'**, measured according to the corresponding direction of development **Y**, should be at least equal to and preferably exceed the average width of the projection itself, measured on the plane of the lamination **1** at right angles to the direction of development **Y**. Due to analogous reasons related to the achievement of effective heat dissipation, it is also preferable that each projection **4**, **4'** features gradually decreasing width along the corresponding direction of development **Y** as the distance from the centre **X1** increases.

Preferably, and as anticipated above, the angular width **α** of the modular element **1** is equal to an integer submultiple of 360°.

In this way, each lamination **6** of the stator core **8** can be assembled by arranging side by side a number of modular elements **1** equal to the above mentioned integer submultiple, so as to form a closed ring.

Advantageously, the division of each annular lamination **6** in several modular elements **1** corresponding to an equivalent number of sectors of the lamination **6**, makes it possible to reduce the scraps of the material used to make the lamination **6**.

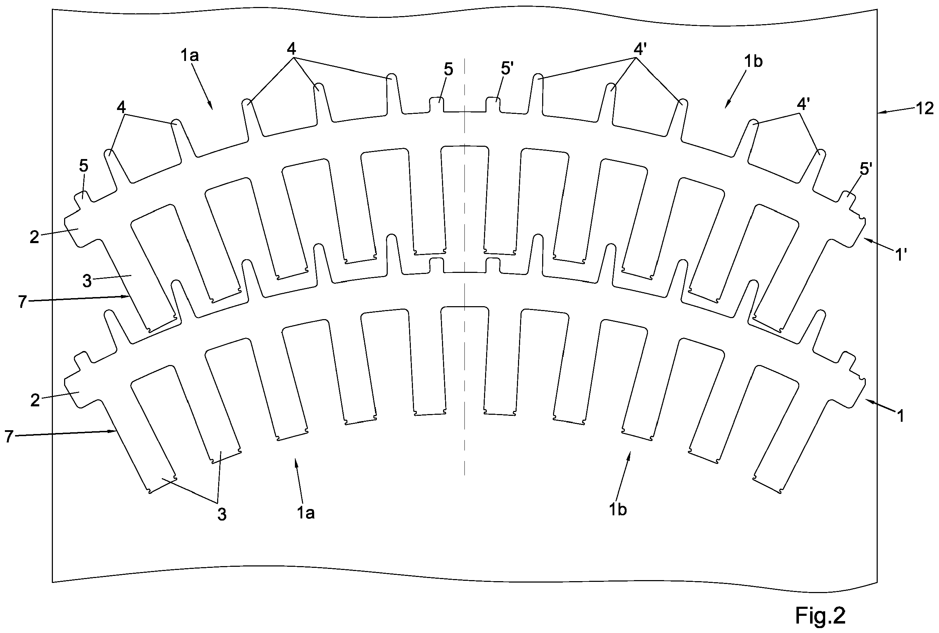

In fact, as shown in Figure 2, each modular element **1** is a single piece obtained, typically, by shearing a continuous strip **12**.

As clearly shown in the above mentioned Figure 2, the modular elements **1**, **1'** with an angular width of less than 360° can be arranged on the strip **12** so as to occupy a larger portion of the surface area of the strip itself, so as to reduce the amount of scraps.

By way of example, the modular elements **1** and **1'** of Figures 1 and 2 have an angular width **α** equal to 60° and, consequently, each lamination **6** is made by using 6 of the above mentioned modular elements **1**, **1'**.

It is also evident that in variant embodiments of the invention the angular width of the modular element **1** can be different from 60°.

As shown in Figure 2, each modular element **1** is configured in such a way that it can be arranged coplanar with a second identical modular element **1'** so that each one of the first projections **4**, **4'** comes to be interposed between two mutually adjacent teeth **3** of the second modular element **1'**.

This is obtained by arranging the first projections **4**, **4'** so that each one of them is spaced from each first projection **4**, **4'** adjacent to it by a distance that cannot be shorter than the width of the end of a corresponding tooth **3**.

In this way, each pair of first adjacent projections **4**, **4'** delimits, together with the peripheral portion **2**, corresponding intermediate cavities, each suited to house a corresponding tooth **3** of said second modular element **1'**.

Therefore, to advantage, the above mentioned arrangement makes it possible to move the two modular elements **1**, **1'** near each other as much as possible along the strip **12**, so as to use the material included between the teeth **3** of the second element **1'** to obtain the first projections **4**, **4'** of the first modular element **1**, consequently reducing the scraps.

Preferably, the distance between the first projections **4**, **4'** substantially corresponds to the distance between the teeth **3**.

In this case, the angular intervals between the first projections **4**, **4'** are smaller than the angular intervals between the teeth **3**, considering the different radial positions of the two elements.

The plate-like body **7** is preferably provided with at least one first angular portion **1a** that develops along the arc of a circle with a profile that is identical to the profile of a second angular portion **1b** of the plate-like body 7 which, compared to the first angular portion **1a**, is shifted of a predefined angular interval **β** around the centre **X1**.

The above mentioned configuration advantageously makes it possible to arrange two adjacent laminations **6** so that the corresponding modular elements **1** of two adjacent layers of the stator core **8** are mutually staggered around the longitudinal axis **X** of the stator core **8** of an angle equal to the above mentioned predefined angular interval **β**, at the same time maintaining the continuity of the fins **11** of the stator core **8**.

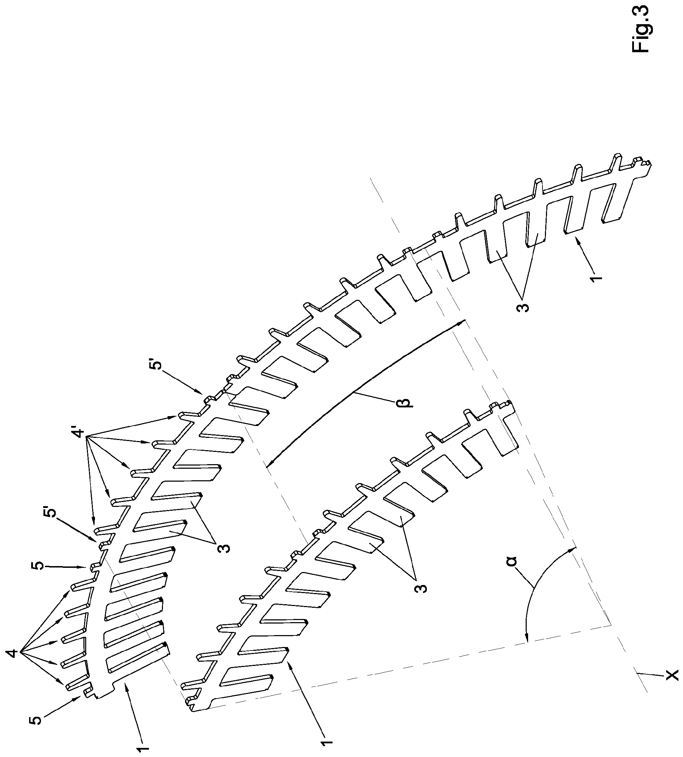

The above mentioned staggered arrangement is shown in Figure 3, illustrating an exploded view of three identical modular elements **1** arranged in the assembly configuration of the stator core **8**.

Considering the above mentioned modular elements **1**, the front one belongs to a first lamination, while the two at the back belong to a second lamination that is staggered by the said angular interval **β** with respect to the first one. Advantageously, the above mentioned staggered position makes it possible to increase the stiffness of the stator core **8**.

Preferably, as shown in Figure 1, the modular elements **1** are made so that each angular portion **1a** and **1b** is symmetrical with respect to a corresponding axis of symmetry that passes through the centre **X1**.

This symmetry makes it possible to make two modular elements face each other with any face, maintaining their ability to be superimposed as described above.

Furthermore, preferably, the first angular portion **1a** and the second angular portion **1b** extend each over a corresponding half of the overall angular width **α** of the modular element **1** and, therefore, the above mentioned angular interval **β** has the same amplitude.

This, advantageously, makes it possible to obtain a stator core **8** that is very stiff, as each modular element **1** overlaps half of a modular element of the adjacent lamination **6**.

In particular, the first projections **4** belonging to the first angular portion **1a** of the modular element **1** have the same shapes and mutual positions as the first projections **4'** belonging to the second angular portion **1b**.

In this way, when the first angular portion **1a** of a modular element **1** is superimposed to the second angular portion **1b** of a second modular element, the first projections **4** of the first modular element **1** coincide precisely with the first projections **4'** of the second modular element.

As can be seen in Figure 4, the laminations **6** are rigidly fixed to each other through joining means **9** that preferably but not necessarily comprise connection bodies **10**, each one of which is welded to a plurality of modular elements **1**.

In the example shown in the figure, the connection bodies **10** are 12 and are arranged on the external surface of the stator core **8** at regular intervals of 30°. Obviously, variant embodiments of the invention may comprise connection bodies in a different number and with different shape and arrangement compared to those described above.

Preferably, the joining means **9** also comprise two second projections **5**, **5'** belonging to each modular element **1** and projecting from the latter in such a way as to delimit a corresponding recess whose profile matches the profile of the cross section of the connection body **10**.

Preferably, the second projections **5**, **5'** are shorter than the first projections **4**, **4'**, so that they can be created in the centre area of the modular element **1** without causing any increase in the amount of scraps resulting from the shearing operation, as can be clearly inferred from Figure 2.

In particular, the second projections **5**, **5'** are preferably shorter than the distance between the peripheral portion **2** of a first modular element **1** and the end of the centre teeth of a second modular element **1'** arranged coplanar with the first one and with its side teeth in contact with the peripheral portion **2** of the first modular element **1**.

Preferably, the second projections **5**, **5'** are arranged symmetrically, analogously to the first projections **4**, **4'** described above.

In particular, the second projections **5** belonging to the first angular portion **1a** of the modular element **1** have the same shapes and mutual positions as the second projections **5'** belonging to the second angular portion **1b**, so as to ensure that the two angular portions **1a** and **1b** can be precisely superimposed to each other.

According to a variant embodiment of the invention not illustrated herein, the connection bodies **10** can be positioned inside special channels in the stator core **8**, defined by aligning corresponding holes made in each lamination **6**. Advantageously, the connection of the laminations **6** obtained through the connection bodies **10** makes it possible to produce a self-bearing stator core **8**, meaning a stator core that does not need to be inserted in a cylindrical casing to remain sound.

Consequently, to advantage, a generator obtained with the stator core **8** weighs less than equivalent generators of the known type, with the corresponding advantages already illustrated above.

Still advantageously, the absence of a casing simplifies the production process and thus reduces the production cost of the stator core.

Figures from 5 to 8 show a modular element **15** according to a variant embodiment of the invention, which differs from the modular element **1** described above for the different shape of the teeth **16**, as well as the stator core **18** obtained with said modular element **15**.

It is important to underline that, except where indicated otherwise, the reference numbers used in these figures to indicate the various elements are the same that are used to indicate the corresponding elements of the modular element **1** and of the stator core **8** previously described.

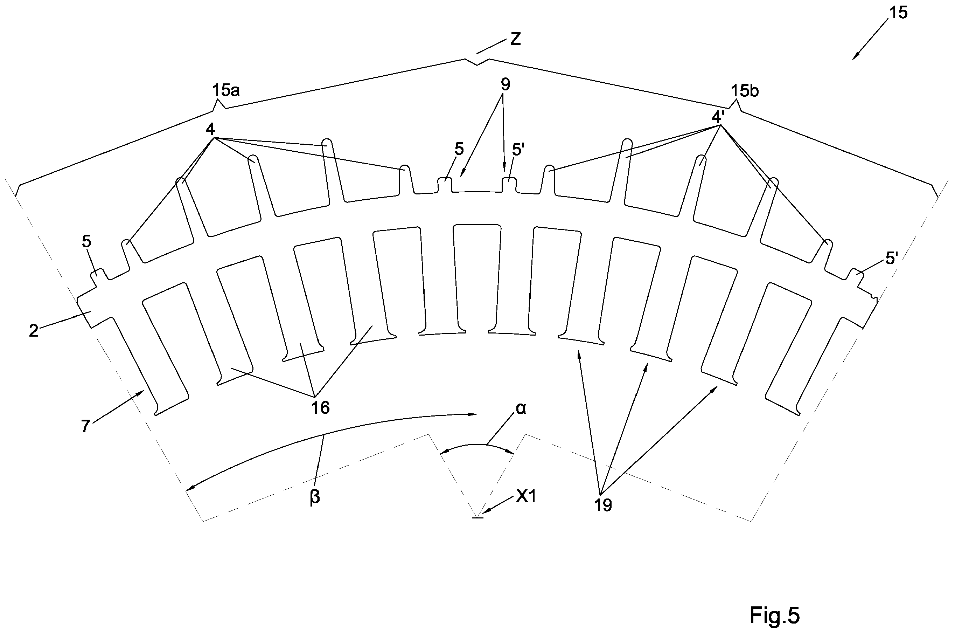

As shown in Figure 5, each one of the teeth **16** of the modular element **15** comprises a widened end **19** that projects from at least one side of the tooth **16**, in circumferential direction with respect to the centre **X1** of the modular element **15**, meaning in orthogonal direction with respect to the radius passing through the tooth **16**.

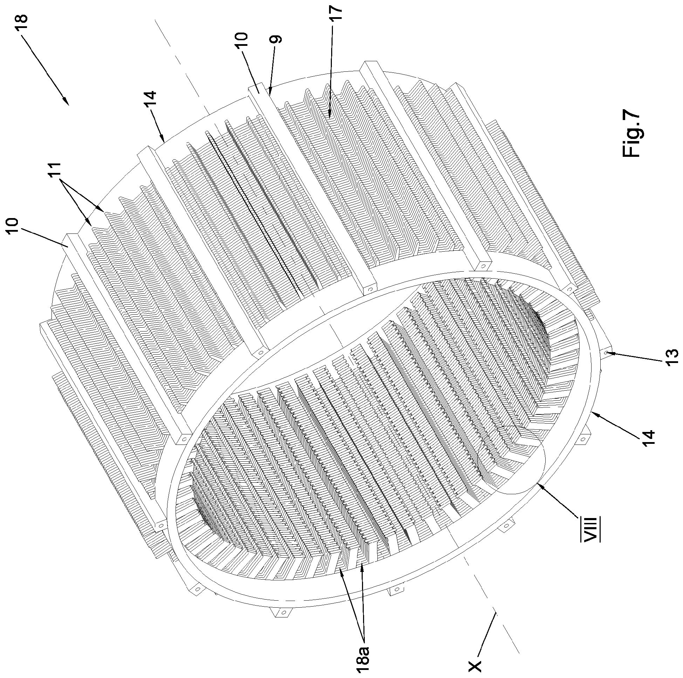

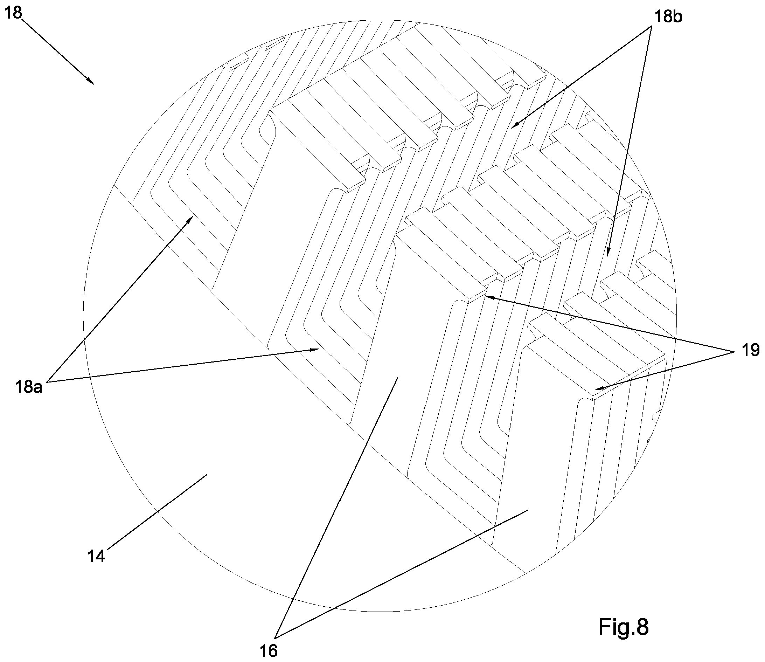

Advantageously, and as shown in Figures 7 and 8, the projections described above prevent the winding from slipping out of the recesses **18a** once the stator core **18** has been assembled, especially in the case where the winding is made using a wire with circular cross section.

In fact, in this case, it is necessary to close the open area **18b** of the recess **18a** through an insulating foil, not illustrated herein but known per se, which is arranged inside the recess **18a** and held in position by the projections described above.

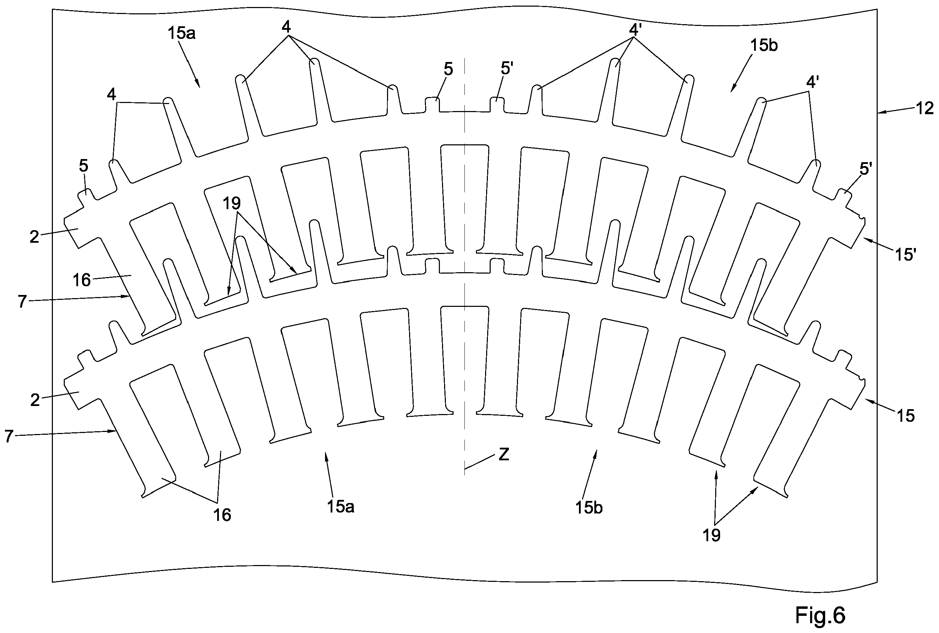

As shown in Figure 6, the projections are short enough to leave, between the ends **19** of each pair of mutually adjacent teeth **16**, a space that is at least as wide as the first projections **4**, **4'**.

In this way, the first projections **4**, **4'** can be interposed between the teeth **16** of a second modular element **15'** that is identical to the first one and arranged, with respect to the first modular element **15**, in an analogous position with respect to the one described for the previous embodiment.

Consequently, all the advantages already mentioned above for the previous embodiment are maintained.

Furthermore, as shown in Figure 6, one or more teeth **16** feature widened ends **19** that project in a different way from the two opposing sides of each tooth, giving the teeth **16** an asymmetrical shape.

In particular, as shown in Figure 6, some teeth **16** have a widened end **19** that projects from one side of the tooth only, while other teeth **16** have corresponding widened ends **19** that project from both sides of the tooth, even if with different lengths on the two sides.

The above mentioned asymmetry of the teeth **16** makes it possible to arrange the first projections **4, 4'** so that they are equally spaced from one another along the circumferential direction, at the same time maintaining the possibility to interpose the first projections **4, 4'** between the teeth **16** of the second modular element **15'**, as is clearly visible in Figure 6.

The equal distance between the first projections **4, 4'** advantageously makes it possible to superimpose the modular elements **15** on one another, in mutually staggered positions and facing any side, as described for the previous embodiment, while maintaining the continuity of the fins **11** of the stator core **18**.

The modular element **15** preferably has a symmetrical shape with respect to an axis of symmetry **Z** passing through the centre **X1**.

Said symmetry makes it possible to obtain recesses **18a** with a symmetrical plan, notwithstanding the asymmetry of the teeth **16** of the individual modular elements **15**.

In fact, as shown in Figure 8, when several symmetrical modular elements **15** of the type described above are superimposed, mutually staggered by an angle equal to half their angular width **α**, the projections of the respective teeth **16** are alternately arranged on one side and on the other of each recess **18a**. In particular, each open area **18b** of the recesses **18a** is asymmetrical, too, with the advantage of making it easier for the insulating foils to be accommodated inside the recesses **18a**.

In practice, for the assembly of the stator core **8** with the modular elements **1**, **1'**, the latter are sheared in succession from a strip **12** in a ferromagnetic material, as described above and illustrated in Figure 2.

In particular, the shearing of two successive modular elements **1** and **1'** is carried out in such a way that each one of the first projections **4**, **4'** of the first modular element **1** is interposed between a corresponding pair of teeth **3** of the second modular element **1'**.

Preferably, the second modular element **1'** is sheared in a position that, with respect to the first modular element **1**, is shifted along the direction of development of the strip **12** by such a distance that the teeth **3** of the second modular element **1'** are arranged so that they intersect the circumference whose centre is **X1** and that is tangential to the top of the first projections **4**, **4'** of the first modular element **1**.

The laminations obtained in this way, arranged side by side so as to form an annular lamination **6**, are stacked on a previous annular layer in a position that, compared to said previous annular layer, is rotated by an angle **β** corresponding to the angular interval described above, as shown in Figure 3. Once the laminations **6** have been stacked, they are welded to the connection bodies **10** that are preferably bars in a metallic material arranged against the external surface of the stator core **8**, parallel to its longitudinal axis **X**, at the level of the recesses defined by the second projections **5**, **5'**.

Before the connection bodies **10** are welded to the laminations **6**, the stator core **8** is preferably compressed at the sides by means of tie rods, not illustrated herein but known per se, that compress the stator core **8** at the sides by means of corresponding annular bodies **14** shown in Figure 4.

A self-bearing stator core **8** provided with cooling fins **11** is thus obtained. Clearly, the operations described above are suited to make also the stator core **18** using modular elements **15** according to the variant embodiment described above.

The above clearly shows that the modular elements described above achieve all the objects of the invention.

In fact, the above mentioned modular elements make it possible to provide a self-bearing stator core provided with cooling fins, which therefore does not require any additional finned casing.

Consequently, the above mentioned stator core makes it possible to obtain a power generator or an electrical machine weighing less than electrical machines of the known type.

Therefore, said stator core is particularly suited to be used in applications for the generation of wind or hydro power, where the weight considerably affects installation and maintenance costs.

Furthermore, the configuration of the modular element that is the subject of the invention is such that it allows any waste of the material used for making it to be minimized.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Modular element (1; 15) for a stator core (8; 18), comprising a plate-like body (7) in a ferromagnetic material provided with:
- a peripheral portion (2) extending for an angular width (α) of less than 360° over an arc of a circle having a centre (X1);
- a plurality of teeth (3; 16) projecting from said peripheral portion (2) towards said centre (X1);
- a plurality of first projections (4, 4') extending from said peripheral portion (2) on the opposite side with respect to said teeth (3; 16) according to corresponding directions of development (Y), each one of said first projections (4, 4') being spaced from each first projection (4, 4') adjacent to it by a distance that cannot be shorter than the width of the end (19) of a corresponding one of said teeth (3; 16);
**characterized in that** said first projections (4, 4') are configured so that each one of them can be interposed between two corresponding adjacent teeth (3; 16) of a second modular element (1'; 15') that is identical to the first one and arranged so that it is coplanar with it, wherein the distance between the outer rims of each two adjacent first projections (4, 4') is smaller than the distance between the ends of two outer teeth in each group of three teeth (3; 16).

2. Modular element (1; 15) according to claim 1), **characterized in that** the direction of development (Y) of each one of said first projections (4, 4') passes through said centre (X1).

3. Modular element (1; 15) according to any of the claims from 1) to 2), **characterized in that** the width of said first projections (4, 4') gradually decreases along said direction of development (Y) as the distance from said centre (X1) increases.

4. Modular element (1; 15) according to any of the preceding claims, **characterized in that** the first projections (4) of said plate-like body (7) belonging to a first angular portion (1a; 15a) develop along said arc of a circle with a profile that is identical to the profile of the first projections (4') belonging to a second angular portion (1b; 15b) of said plate-like body (7) that, compared to said first angular portion (1a), is shifted by a predefined angular interval (β) along said arc of a circle.

5. Modular element (15) according to any of the preceding claims, **characterized in that** said plate-like body (7) is symmetrical with respect to an axis of symmetry (Z) passing through said centre (X1) **and in that** at least a first one of said teeth (16) comprises a widened end (19) projecting from at least one side of said tooth (16) in a direction orthogonal to the radial direction defined by said centre (X1) over a length that exceeds the length by which said widened end (19) projects from the opposite side of said tooth (16).

6. Stator core (8; 18) comprising a plurality of laminations (6; 17) arranged so that they are stacked according to a direction parallel to a longitudinal axis (X), **characterized in that** each one of said laminations (6; 17) comprises at least one modular element (1; 15) according to any of the preceding claims.

7. Stator core (8; 18) according to claim 6), **characterized in that** each one of said laminations (6; 17) comprises a plurality of modular elements (1; 15), each one of which features an angular width (α) equal to an integer submultiple of 360°, arranged adjacent to one another so as to form a ring.

8. Stator core (8; 18) according to claim 7), **characterized in that** it comprises at least two modular elements (1) according to claim 5), mutually staggered by an angle equal to said predefined angular interval (β) around said longitudinal axis (X).

9. Stator core (18) according to claim 7), **characterized in that** it comprises at least two modular elements (15) according to claim 6), mutually staggered by an angle equal to half said angular width (α) around said longitudinal axis (X).

10. Stator core (8; 18) according to any of the claims from 6) to 9), **characterized in that** said laminations (6; 17) are rigidly connected to one another through joining means (9).

11. Stator core (8; 18) according to claim 10), **characterized in that** said joining means (9) comprise at least one connection body (10) welded to a plurality of said laminations (6; 17).

12. Stator core (8; 18) according to claim 11), **characterized in that** said joining means (9) comprise at least two second projections (5, 5') belonging to each one of said modular elements (1; 15) and projecting from the corresponding peripheral portion (2) so as to delimit a corresponding recess whose profile matches the profile of the cross section of said connection body (10), wherein said second projections (5, 5') are shorter than said first projections (4, 4').

13. Method for making two modular elements (1, 1'; 15, 15'), comprising the operation of shearing two modular elements (1, 1'; 15, 15') according to any of the claims from 1) to 5) from a strip (12), **characterized in that** said two modular elements (1, 1'; 15, 15') are sheared so that each one of the first projections (4, 4') of a first one of said modular elements (1; 15) is obtained from the material of said strip (12) interposed between a corresponding pair of teeth (3; 16) of the second modular element (1'; 15').

## Patentansprüche

1. Modulares Element (1; 15) für einen Statorenkern (8; 18), einen plattenartigen Körper (7) in einem ferromagnetischen Werkstoff umfassend, das Folgendes aufweist:
- einen peripheren Abschnitt (2), der sich über eine Winkelweite (α) von weniger als 360° über einen Kreisbogen mit einem Mittelpunkt (X1) erstreckt;
- eine Vielzahl von Zähnen (3; 16), die aus dem besagten peripheren Abschnitt (2) zum Mittelpunkt (X1) hin ragen;
- eine Vielzahl von ersten Vorsprüngen (4, 4'), die sich aus dem besagten peripheren Abschnitt (2) an der den besagten Zähnen (3; 16) entgegengesetzten Seite entsprechenden Verlaufsrichtungen (Y) gemäß erstrecken, wobei jeder der besagten ersten Vorsprünge (4, 4') von jedem ersten, neben ihm liegenden Vorsprung (4, 4') mit einem Abstand, der nicht kürzer sein kann als die Breite des Endes (19) eines entsprechenden der besagten Zähne (3; 16) distanziert ist;
**dadurch gekennzeichnet, dass** die besagten ersten Vorsprünge (4, 4') so konfiguriert sind, dass jeder von ihnen zwischen zwei entsprechende, nebeneinanderliegende Zähne (3; 16) eines zweiten modularen Elements (1'; 15') eingefügt werden kann, das mit dem ersten identisch und so angeordnet ist, dass es komplanar mit ihm ist, wobei der Abstand zwischen den Außenrändern von jede zwei nebeneinanderliegenden ersten Vorsprüngen (4, 4') kleiner ist als der Abstand zwischen den Enden von zwei äußeren Zähnen in jeder Gruppe aus drei Zähnen (3; 16).

2. Modulares Element (1; 15) nach Patentanspruch 1), **dadurch gekennzeichnet, dass** die Verlaufsrichtung (Y) jedes der besagten ersten Vorsprünge (4, 4') durch den besagten Mittelpunkt (X1) verläuft.

3. Modulares Element (1; 15) nach einem jeden der Patentansprüche von 1) bis 2), **dadurch gekennzeichnet, dass** die Breite der besagten ersten Vorsprünge (4, 4') mit zunehmendem Abstand von dem besagten Mittelpunkt (X1) entlang der besagten Verlaufsrichtung (Y) schrittweise abnimmt.

4. Modulares Element (1; 15) nach einem jeden der vorstehenden Patentansprüche, **dadurch gekennzeichnet, dass** die ersten Vorsprünge (4) des besagten plattenartigen Körpers (7), die zu einem ersten Winkelabschnitt (1a; 15a) gehören, an dem besagten Kreisbogen entlang mit einem Profil verlaufen, das identisch ist mit dem Profil der ersten Vorsprünge (4'), die zu einem zweiten Winkelabschnitt (1b; 15b) des besagten plattenartigen Körpers (7) gehören, der im Vergleich zu dem besagten ersten Winkelabschnitt (1a) um ein vorbestimmtes Winkelintervall (β) entlang des besagten Kreisbogens versetzt ist.

5. Modulares Element (15) nach einem jeden der vorstehenden Patentansprüche, **dadurch gekennzeichnet, dass** der besagte plattenartige Körper (7) bezüglich einer durch den besagten Mittelpunkt (X1) verlaufenden Symmetrieachse (Z) symmetrisch ist **und dadurch, dass** wenigstens ein erster der besagten Zähne (16) ein geweitetes Ende (19) umfasst, das in eine zur radialen, durch den besagten Mittelpunkt (X1) definierten Richtung orthogonale Richtung aus wenigstens einer Seite des besagten Zahns (16) herausragt, und zwar über eine Länge, die die Länge, um welche das besagte geweitete Ende (19) aus der entgegengesetzten Seite des besagten Zahns (16) herausragt, überschreitet.

6. Statorenkern (8; 18) eine Vielzahl von Lamellen (6; 17) umfassend, die so angeordnet sind, dass sie einer zu einer Längsachse (X) parallelen Richtung gemäß gestapelt sind, **dadurch gekennzeichnet, dass** jede der besagten Lamellen (6; 17) wenigstens ein modulares Element (1; 15) nach einem jeden der vorstehenden Patentansprüche umfasst.

7. Statorenkern (8; 18) nach Patentanspruch 6), **dadurch gekennzeichnet, dass** jede der besagten Lamellen (6; 17) eine Vielzahl modularer Elemente (1; 15) umfasst, von denen jede eine Winkelweite (α) aufweist, die gleich einer ganzen Teilmenge von 360° ist und die nebeneinander angeordnet sind, so dass sie einen Ring bilden.

8. Statorenkern (8; 18) nach Patentanspruch 7), **dadurch gekennzeichnet, dass** er wenigstens zwei modulare Elemente (1) nach Patentanspruch 5) umfasst, die wechselseitig um die besagte Längsachse (X) versetzt sind mit einem Winkel, der gleich dem besagten vorbestimmten Winkelintervall (β) ist.

9. Statorenkern (18) nach Patentanspruch 7), **dadurch gekennzeichnet, dass** er wenigstens zwei modulare Elemente (15) nach Patentanspruch 6) umfasst, die wechselseitig um die besagte Längsachse (X) versetzt sind mit einem Winkel, der gleich der Hälfte der Winkelweite (α) ist.

10. Statorenkern (8; 18) nach einem jeden der Patentansprüche von 6) bis 9), **dadurch gekennzeichnet, dass** die besagten Lamellen (6; 17) durch Verbindungsmittel (9) starr miteinander verbunden sind.

11. Statorenkern (8; 18) nach Patentanspruch 10), **dadurch gekennzeichnet, dass** die besagten Verbindungsmittel (9) wenigstens einen Verbindungskörper (10) umfassen, der mit einer Vielzahl der besagten Lamellen (6; 17) verschweißt ist.

12. Statorenkern (8; 18) nach Patentanspruch 11), **dadurch gekennzeichnet, dass** die besagten Verbindungsmittel (9) wenigstens zwei zweite Vorsprünge (5, 5') umfassen, die zu jedem der besagten modularen Elemente (1; 15) gehören und aus dem entsprechenden peripheren Abschnitt (2) ragen, so dass sie eine entsprechende Vertiefung begrenzen, deren Profil zu dem Profil des Querschnitts des besagten Verbindungskörpers (10) passt, wobei die besagte zweiten Vorsprünge (5, 5') kürzer sind als die besagten ersten Vorsprünge (4, 4').

13. Verfahren zur Herstellung von zwei modularen Elementen (1, 1'; 15, 15'), den Vorgang des Abschneidens von zwei modularen Elementen (1, 1'; 15, 15') nach einem jeden der Patentansprüche von 1) bis 5) aus einem Streifen (12) umfassend, **dadurch gekennzeichnet, dass** die besagten zwei modularen Elemente (1, 1'; 15, 15') abgeschnitten sind, so dass jeder der ersten Vorsprünge (4, 4') eines ersten der besagten modularen Elemente (1; 15) aus dem Material des besagten Streifens (12) gewonnen wird, der zwischen einem entsprechenden Paar Zähne (3; 16) des zweiten modularen Elements (1'; 15') eingefügt ist.

## Revendications

1. Élément modulaire (1; 15) pour un noyau de stator (8; 18), comprenant un corps laminaire (7) en matériau ferromagnétique pourvu de:
- une portion périphérique (2) s'étendant pour une ampleur angulaire (α) inférieure à 360° le long d'un arc de circonférence ayant un centre (X1);
- une pluralité de dents (3; 16) saillant de ladite portion périphérique (2) vers ledit centre (X1);
- une pluralité de premières saillies (4, 4') s'étendant de ladite portion périphérique (2) sur le côté opposé par rapport auxdites dents (3; 16) selon des directions correspondantes de développement (Y), chacune desdites premières saillies (4, 4') étant espacées de chaque première saillie (4, 4') adjacente à celle-ci d'une distance qui ne peut pas être plus courte que la largeur de l'extrémité (19) d'une desdites dents correspondantes (3, 16);
**caractérisé en ce que** lesdites premières saillies (4, 4') sont configurées de manière à ce que chacune de celles-ci puisse être interposée entre deux dents adjacentes correspondantes (3; 16) d'un deuxième élément modulaire (1'; 15') qui est identique au premier élément et disposé coplanaire à celui-ci, où la distance entre les bords extérieurs de chacune des deux premières saillies adjacentes (4, 4') est plus petite que la distance entre les extrémités de deux dents extérieures dans chaque groupe de trois dents (3 ; 16).

2. Élément modulaire (1; 15) selon la revendication 1), **caractérisé en ce que** la direction de développement (Y) de chacune desdites premières saillies (4, 4') passe à travers ledit centre (X1).

3. Élément modulaire (1; 15) selon l'une quelconque des revendications de 1) à 2), **caractérisé en ce que** la largeur desdites premières saillies (4, 4') diminue le long de ladite direction de développement (Y) au fur et à mesure que la distance dudit centre (X1) augmente.

4. Élément modulaire (1; 15) selon l'une quelconque des revendications précédentes, **caractérisé en ce que** les premières saillies (4) dudit corps laminaire (7) appartenant à une première portion angulaire (1a; 15a) se développent le long dudit arc de circonférence avec un profil identique au profil des premières saillies (4') appartenant à une deuxième portion angulaire (1b; 15b) dudit corps laminaire (7) qui, par rapport à ladite première portion angulaire (1a), est déplacée d'un intervalle angulaire prédéfini (β) le long dudit arc de circonférence.

5. Élément modulaire (15) selon l'une quelconque des revendications précédentes, **caractérisé en ce que** ledit corps laminaire (7) est symétrique par rapport à un axe de symétrie (Z) passant par ledit centre (X1) **et en ce qu'**au moins une première desdites dents (16) comprend une extrémité agrandie (19) qui saillit d'au moins un côté de ladite dent (16) en direction orthogonale à la direction radiale définie par ledit centre (X1) pour une longueur supérieure par rapport à la longueur pour laquelle ladite extrémité agrandie (19) saillit dudit côté opposé de ladite dent (16).

6. Noyau de stator (8; 18) comprenant une pluralité de laminages (6; 17) disposés de façon à être empilés un sur l'autre selon une direction parallèle à un axe longitudinal (X), **caractérisé en ce que** chacun desdits laminages (6; 17) comprend au moins un élément modulaire (1; 15) selon l'une quelconque des revendications précédentes.

7. Noyau de stator (8; 18) selon la revendication 6), **caractérisé en ce que** chacun desdits laminages (6; 17) comprend une pluralité d'éléments modulaires (1; 15), chacun desquels présente une ampleur angulaire (α) égale à un sous-multiple entier de 360°, disposés adjacents l'un à l'autre pour former un anneau.

8. Noyau de stator (8; 18) selon la revendication 7), **caractérisé en ce qu'**il comprend au moins deux éléments modulaires (1) réalisés selon la revendication 5), réciproquement décalés d'un angle égal audit intervalle angulaire prédéfini (β) autour dudit axe longitudinal (X).

9. Noyau de stator (18) selon la revendication 7), **caractérisé en ce qu'**il comprend au moins deux éléments modulaires (15) réalisés selon la revendication 6), réciproquement décalés d'un angle égal à la moitié de ladite ampleur angulaire (α) autour dudit axe longitudinal (X).

10. Noyau de stator (8; 18) selon l'une quelconque des revendications de 6) à 9), **caractérisé en ce que** lesdits laminages (6; 17) sont rigidement reliés entre eux par des moyens de jonction (9).

11. Noyau de stator (8; 18) selon la revendication 10), **caractérisé en ce que** lesdits moyens de jonction (9) comprennent au moins un corps de connexion (10) soudé à une pluralité desdits laminages (6; 17).

12. Noyau de stator (8; 18) selon la revendication 11), **caractérisé en ce que** lesdits moyens de jonction (9) comprennent au moins deux deuxièmes saillies (5, 5') appartenant à chacun desdits éléments modulaires (1; 15) et saillant de la portion périphérique correspondante (2) de manière à délimiter une cavité correspondante ayant un profil correspondant au profil de la section transversale dudit corps de connexion (10), où lesdites deuxièmes saillies (5, 5') sont plus courtes que lesdites premières saillies (4, 4').

13. Méthode pour la réalisation de deux éléments modulaires (1, 1'; 15, 15'), comprenant l'opération de découpage desdits éléments modulaires (1, 1'; 15, 15') selon l'une quelconque des revendications de 1) à 5), d'une bande (12), **caractérisée en ce que** lesdits deux éléments modulaires (1, 1'; 15, 15') sont découpés de manière à ce que chacune des premières saillies (4, 4') d'un premier desdits éléments modulaires (1; 15) soit obtenue du matériau de ladite bande (12) interposée entre un couple de dents correspondant (3; 16) du deuxième élément modulaire (1'; 15').
